# EUROPÄISCHE PATENTSCHRIFT

(11) **EP 2 292 535 B1**
(45) Veröffentlichungstag und Bekanntmachung des Hinweises auf die Patenterteilung: **16.12.2015**
(21) Anmeldenummer: 10174579.2
(22) Anmeldetag: 31.08.2010
(51) Int. Cl.: B65G 17/20, B65G 17/32

(54) **Transportkette für Behältnisse mit Puffermöglichkeit**
Transport chain for containers with buffer option
Chaîne de transport pour récipients ayant une possibilité de tampon

(30) Priorität: 02.09.2009 DE 102009039697
(43) Veröffentlichungstag der Anmeldung: 09.03.2011
(73) Patentinhaber: Krones AG, 93073 Neutraubling (DE)
(72) Erfinder: Landler, Bruno, 93073, Neutraubling (DE)
(74) Vertreter: Bittner, Bernhard

(56) Entgegenhaltungen:
- GB-A- 2 005 621
- US-A- 2 888 131
- US-A1- 2008 142 336

## Beschreibung

Die vorliegende Erfindung bezieht sich auf eine Transporteinrichtung für Behältnisse. Aus dem Stand der Technik sind unterschiedlichste Anlagen zum Behandeln von Behältnissen bekannt, wie beispielsweise Fülleinrichtungen, Etikettiereinrichtungen, Blasmaschinen, Sterilisationseinrichtungen und dergleichen. Dabei sind diese Behandlungseinrichtungen üblicher Weise durch Transporteinrichtungen, wie beispielsweise Transportsterne oder dergleichen verbunden. Falls in einer derartigen Anlage eine einzelne Einheit wie beispielsweise eine Fülleinheit ausfällt, kann dies dazu führen, dass die komplette Anlage kurzzeitig stillgesetzt werden muss. Falls beispielsweise durch eine Heizeinrichtung Behältnisse zur Erwärmung hindurchgeführt werden, führt der Stillstand dazu, dass die im Ofen befindlichen Behältnisse unbrauchbar werden, da sie entweder zu lange oder zu kurz beheizt werden und in der Regel die Heizzeit genau auf die Behältnisse abzustimmen ist.

Aus der US 2009/0014615 A1 sind ein Verfahren und eine Vorrichtung zum Halten von Behältnissen bekannt. Dabei ist ein Träger vorgesehen, an dem zwei verschiedene Halteelemente angeordnet sind, welche unterschiedliche Behältnisse halten können. Damit kann diese Anlage zwei unterschiedliche Behältnisformate behandeln bzw. transportieren.

Die US 2008/0142336 A1 beschreibt eine Vorrichtung nach dem Oberbegriff des Anspruchs 1.

Aus der GB 2 005 621 A ist ebenfalls ein Transportsystem bekannt, welches Stückgüter wie Behältnisse fördert, wobei zwischen den Förderelementen gelenkige Verbindung bestehen.

Die US 2,888,131 beschreibt ebenfalls ein Transportsystem für Artikel. Hierbei können Kunststoffvorformlinge in eine Doppelkavität eingegeben werden und so zu Kunststoffbehältnissen geblasen werden.

Der vorliegenden Erfindung liegt die Aufgabe zugrunde, eine Transporteinrichtung zu schaffen, welche auch eine Pufferungsmöglichkeit für die Behältnisse bietet. Weiterhin soll eine Transporteinrichtung geschaffen werden, die je nach Wunsch auch unterschiedliche Behältnisformate verarbeiten kann. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Transportieren von Behältnissen weist eine Transporteinrichtung auf, welche eine Vielzahl von Halteeinrichtungen für die Behältnisse - bevorzugt vereinzelt und besonders bevorzugt auch mit konstanter Teilung - entlang eines vorgegebenen Transportpfades transportiert, wobei wenigstens eine dieser Halteeinrichtungen wenigstens zwei Halteelemente zum Greifen der Behältnisse aufweist und die Halteeinrichtung bzw. Teile dieser Halteeinrichtung drehbar gegenüber der Transporteinrichtung um eine vorgegebene gemeinsame Drehachse sind. Auf diese Weise ist es möglich, die einzelnen Halteelemente jeweils bezüglich der Drehachse zu drehen und damit bewusst zu wählen, welches Halteelement ein Behältnis aufnehmen soll.

Durch diese Drehung kann genau ein Halteelement in die Lage versetzt werden, Behältnisse von anderen Anlagen aufzunehmen oder an diese abzugeben. Daher ist in Abhängigkeit von der Drehstellung der Halteeinrichtung stets nur genau ein Halteelement zur Aufnahme und/oder Abgabe von Behältnissen geeignet. Die vorliegende Erfindung ist insbesondere für den Transfer von Behältnissen zwischen mehreren Maschinen wie beispielsweise einer Blasmaschine, einer Etikettiermaschine oder einem Füller gedacht.

Vorteilhaft ist die besagte Drehachse, um welche die Halteeinrichtungen bzw. Teile dieser Halteeinrichtungen drehbar angeordnet sind, im Wesentlichen parallel zu einer Längsrichtung der transportierten Behältnisse.

Erfindungsgemäß weist die Vorrichtung eine Transportkette zum Transportieren der Halteeinrichtungen auf oder ist als solche Kette ausgebildet. Dabei ist es möglich, dass die Halteeinrichtungen derart miteinander verbunden sind, dass durch die Vielzahl der Halteeinrichtungen selbst die besagte Transportkette gebildet wird. Damit wird vorgeschlagen, dass die Halteeinrichtungen auf einer Kette mit insbesondere definierter und besonders bevorzugt auch einheitlicher Teilung geführt werden, wobei jedes dieser Kettenglieder mehrere Behältnisaufnahmemöglichkeiten, insbesondere zwischen zwei und fünf Behälteraufnahmemöglichkeiteh, und insbesondere zwischen zwei und vier Behälteraufnahmemöglichkeiten bzw. Halteelemente aufweisen kann.

Vorzugsweise ist die Transporteinrichtung auch als Pufferungseinrichtung für die Behältnisse geeignet.

In einer erfindungsgemäßen Ausführungsform erstrecken sich wenigstens zwei Halteelemente in unterschiedlichen Richtungen bezüglich der Drehachse. So können diese beiden Halteelemente beispielsweise in unterschiedliche Richtungen weisen, so dass im Betrieb zwei Behältnisse aufgenommen werden können, und zwischen diesen beiden Behältnissen die besagte Drehachse verläuft.

Bei einer weiteren vorteilhaften Ausführungsform ist wenigstens ein Halteelement und bevorzugt mehrere und besonders bevorzugt sämtliche Halteelemente als passive Halteelemente ausgebildet. Dies bedeutet, dass die besagten Halteelemente nicht selbst in die Behältnisse greifen, sondern die Behältnisse an diese heran und insbesondere auch in diese hineingedrückt werden.

Bei einer weiteren vorteilhaften Ausführungsform weist wenigstens eine Halteeinrichtung ein mechanisches Antriebselement auf, mittels dem eine Drehung der Halteeinrichtung um die Drehachse bewirkbar ist. So kann beispielsweise ein Betätigungselement vorgesehen sein, welches gedreht werden kann, wobei die Drehung des Betätigungselementes auch eine Drehung der Halteeinrichtung bzw. der Halteelemente ergibt. Daneben könnten jedoch auch elektrische Antriebe zum Bewirken dieser Drehbewegung der Halteeinrichtungen vorgesehen sein.

Bei einer weiteren vorteilhaften Ausführungsform weist die Vorrichtung ein insbesondere stationär angeordnetes Drehelement auf, welches mit dem Antriebselement der Halteeinrichtung zusammenwirkt, um die Halteeinrichtung um die besagte Drehachse zu drehen. So kann beispielsweise ein Schaltnocken vorgesehen sein, der bei einer Relativbewegung des Antriebselementes eine Drehung der Halteinrichtung bewirkt. Dieser Schaltnocken kann beispielsweise zuschaltbar sein, so dass auf Wunsch an bestimmten Stellen oder zu bestimmten Zeiten eine Drehung der Halteeinrichtungen - insbesondere um einen definierten Drehwinkel - durchgeführt wird und an anderen Stellen oder zu bestimmten anderen Zeiten nicht.

Bei einer weiteren vorteilhaften Ausführungsform weist wenigstens eine Halteeinrichtung eine Rolleinrichtung auf, welche gegenüber einer Führungsfläche abrollt. So können beispielsweise die einzelnen Kettenglieder bzw. Halteinrichtungen mit zwei beispielsweise auch vier Laufrollen ausgestattet sein, welche auf zwei parallel angeordneten Rohren geführt sind. Vorzugsweise sind diese beiden Rohre in einer waagerechten Richtung geführt.

An den Endseiten der Antriebseinrichtung können sich Antriebs- bzw. Umlenkräder befinden. Eine Spannung dieser einzelnen Kettenglieder bzw. Halteinrichtungen kann über einen Spanner an einem der Umlenk- oder Antriebsräder erreicht werden.

Bei einer weiteren vorteilhaften Ausführungsform ist an wenigstens einer Halteeinrichtung eine Abschirmeinrichtung angeordnet, welche die Öffnungen der Behältnisse wenigstens teilweise abdeckt. In dieser Ausführungsform eignet sich die Vorrichtung insbesondere zum Transport von noch offenen Behältnissen von einer Behandlungsstation in eine weitere Behandlungsstation. Durch die Abschirmeinrichtung, bei der es sich beispielsweise um eine Abschirmplatte handeln kann, können die Mündungen der Behältnisse abgedeckt werden.

Bei einer weiteren vorteilhaften Ausführungsform sind die Halteelemente wenigstens einer Halteeinrichtung einteilig ausgebildet. Bei dieser einteiligen Ausführungsform können insgesamt die Herstellungskosten für die Halteeinrichtungen reduziert und die Halteeinrichtungen als Masseteil gefertigt werden.

Vorzugsweise sind die Halteelemente aus einem Kunststoff gefertigt, wodurch die Herstellungskosten weiter gesenkt werden können.

Bei einer weiteren vorteilhaften Ausführungsform sind wenigstens zwei Halteelemente einer Halteeinrichtung unterschiedlich ausgebildet. In diesem Falle kann die Transporteinrichtung auf zwei unterschiedliche Behältnistypen eingestellt werden und auf diese Weise ein Garniturenwechsel erleichtert werden.

Vorzugsweise sind die besagten Halteelemente als passive Elemente ausgeführt und besonders bevorzugt sind die Halteelemente aus einem Kunststoff hergestellt.

Die vorliegende Erfindung ist weiterhin auf ein Verfahren zum Transportieren von Behältnissen mit einer Vorrichtung der oben beschriebenen Art gerichtet, wobei mittels einer Transporteinrichtung eine Vielzahl von Halteeinrichtungen vereinzelt entlang eines vorgegebenen geschlossenen Transportpfades transportiert werden und jede Halteeinrichtung mehrere Halteelemente zum Halten der Behältnisse aufweist, wobei die Halteelemente wenigstens zeitweise um eine vorgegebene Drehachse gegenüber der Transporteinrichtung gedreht werden. Durch dieses Drehen der Halteelemente kann eine Umstellung der Transporteinrichtung beispielsweise von einem normalen Modus in einen Auffüllmodus, in dem die Vorrichtung als Puffer wirkt, vorgenommen werden.

Vorzugsweise wird wenigstens zeitweise wenigstens ein Behältnis entlang des vollständigen Transportpfades transportiert. Bei dieser Verfahrensart wirk die Vorrichtung als Pufferungseinrichtung, in der mehrere Behältnisse eingelagert werden können.

Bei einem weiteren vorteilhaften Verfahren werden die Behältnisse von einer ersten Behandlungseinrichtung zum Behandeln von Behältnissen über die Transporteinrichtung zu einer zweiten Behandlungseinrichtung zum Behandeln von Behältnissen transportiert.

Weitere Vorteile und Ausführungsformen ergeben sich aus den beigefügten Zeichnungen.

Darin zeigen:
- Fig. 1: eine erste teilweise Ansicht einer erfindungsgemäßen Transporteinrichtung;
- Fig. 2: eine Detailansicht der in Fig. 1 gezeigten Transporteinrichtung;
- Fig. 3: eine Draufsicht auf eine Halteeinrichtung;
- Fig. 4: eine Draufsicht auf die Transporteinrichtung aus Fig. 1;
- Fig. 5: eine weitere Detaildarstellung einer erfindungsgemäßen Transporteinrichtung; und
- Fig. 6a - 6d: eine Veranschaulichung von Anwendungsfällen der erfindungsgemäßen Transporteinrichtung;

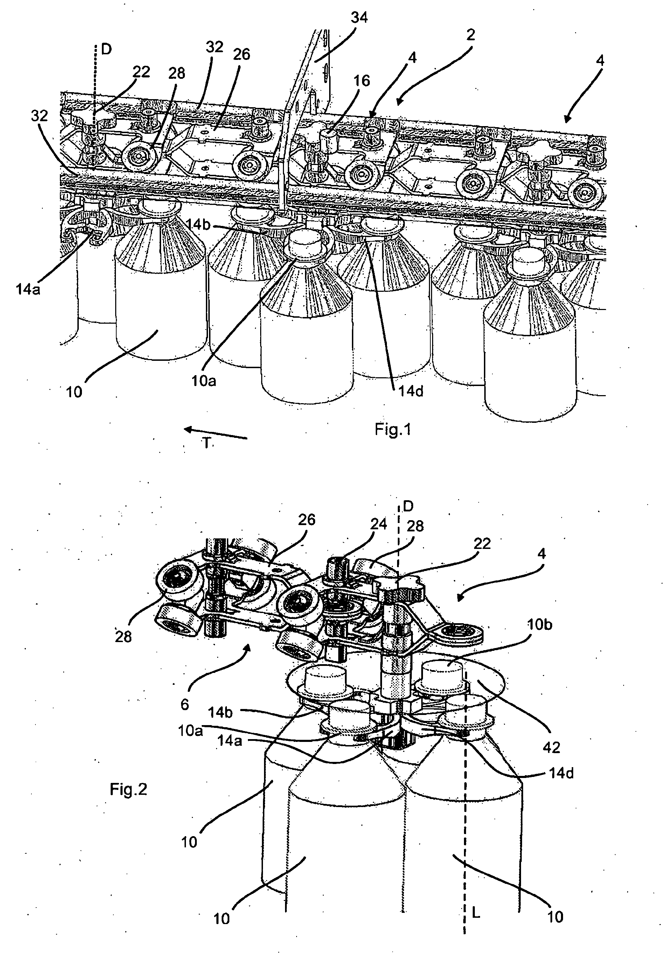

Fig. 1 zeigt eine erfindungsgemäße Transporteinrichtung 2 als Bestandteil einer erfindungsgemäßen in ihrer Gesamtheit mit 1 bezeichnete Vorrichtung zum Transportieren von Behältnissen. Diese Transporteinrichtung 2 weist dabei eine Vielzahl von Halteeinrichtungen 4 auf, an denen hier jeweils drei oder vier Behältnisse 10 angeordnet sind. Zu diesem Zweck weisen die einzelnen Halteeinrichtungen Halteelemente 14a und 14b, 14c und 14d auf (14c nicht gezeigt), welche die Behältnisse 10 jeweils unterhalb ihres Tragrings 10a greifen. Es könnten jedoch auch Halteelemente wie etwa Haltedorne vorgesehen sein, welche in die Mündungen 10b der Behältnisse eingreifen.

Dabei sind die einzelnen Halteelemente 14a bis 14d hier miteinander einteilig ausgebildet und aus Kunststoff gefertigt. Die einzelnen Halteeinrichtungen 4 werden von der Transporteinrichtung 2 entlang des Transportpfades T, das heißt hier von rechts nach links, gefördert. Das Bezugszeichen 26 kennzeichnet ein Kettengliedelement, über welches die einzelnen Halteeinrichtungen 4 verbunden sind. Weiterhin sind Rolleinrichtungen 28 bzw. Räder vorgesehen, die sich gegenüber Schienen 32 abstützen. Entlang dieser Schienen 32, welche ebenfalls Bestandteil der Vorrichtung 1 zum Transportieren sind, werden damit die Halteeinrichtungen 4 gefördert.

Das Bezugszeichen 22 kennzeichnet ein mechanisches Antriebselement, welches gedreht werden kann und welches mit den einzelnen Halteelementen 14a bis 14d gekoppelt ist, so dass auch diese um eine Drehachse D gedreht werden. Die Schienen 32 werden über Verbindungselemente 34 in einem vorbestimmten Abstand gehalten.

Das Bezugszeichen 16 kennzeichnet ein Drehelement, welches eine Drehung der einzelnen Antriebselemente 22 bewirkt. Genauer werden, wenn die Antriebselemente 22 entlang des Transportpfades T bewegt werden, die Antriebselemente 22 an dieses Drehelement 16 anstoßen, was zu einer Drehung des Antriebselementes 22 und damit auch der einzelnen Halteelemente 14a bis 14d führt. Das Drehelement 16 bzw. die Schaltnocke kann nach Wunsch eingerückt oder ausgerückt werden, wobei in einem ausgerückten Zustand keine Drehung der Antriebselemente 22 bewirkt wird. Genauer gesagt, bewirkt das Drehelement 16 jeweils eine Drehung des Antriebselementes um 90º. Dies korrespondiert auch zu der Anordnung der Halteeinrichtung, welche jeweils maximal vier Behältnisse aufnehmen kann, d.h. vier Halteelemente 14a - 14d aufweist.

Fig. 2 zeigt eine Detaildarstellung einer Halteeinrichtung 4. Man erkennt hier wieder die vier Halteelemente 14a bis 14d, welche - wie oben erwähnt - als Kunststoffklammern ausgeführt sind. Diese können um die Drehachse D mittels des Antriebselementes 22 gedreht werden. Weiterhin erkennt man wieder die einzelnen Kettenglieder 26, die jeweils über Verbindungswellen 24 gelenkig miteinander verbunden sind, so dass sich insgesamt die mit dem Bezugszeichen 6 gekennzeichnete Transportkette ergibt.

Die Drehachse D ist dabei im Wesentlichen parallel zu einer Längsrichtung L der Behältnisse. Unter im Wesentlichen parallel wird dabei verstanden, dass ein Winkel zwischen der Richtung der Drehachse D und der Längsrichtung dem Betrag nach kleiner als 15°, bevorzugt kleiner als 10° und besonders bevorzugt kleiner als 5° ist

Das Bezugszeichen 42 kennzeichnet eine Abdeckeinrichtung wie eine Abdeckscheibe, welche die Mündungen 10c der Behältnisse 10 abdeckt. Diese Abdeckeinrichtung 42 kann dabei stationär angeordnet sein oder sich mit den Halteelementen mitdrehen.

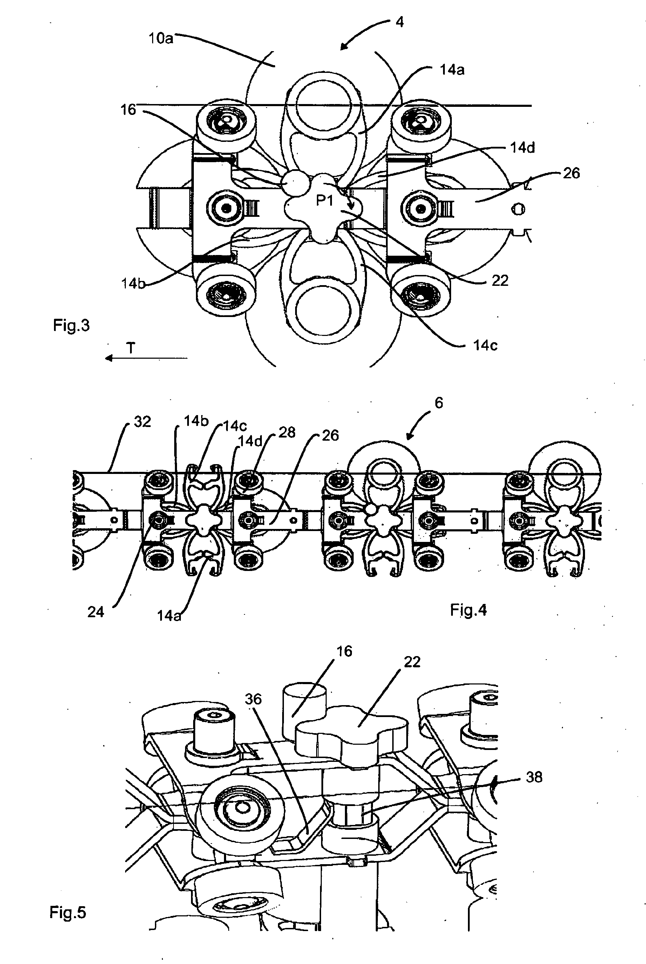

Fig. 3 zeigt eine Draufsicht auf eine Halteeinrichtung 4. Man erkennt hier wiederum das Drehelement 16, welches bei einer Bewegung der Halteeinrichtung entlang des Transportpfades T eine Drehung des Antriebselementes 22 im Uhrzeigersinn, das heißt entlang des Pfeils P1 bewirkt. Die vier einzelnen Halteelemente erstrecken sich bezüglich der Drehachse D hier in einem Winkel von jeweils 90º zueinander. Das Antriebselement 22 ist -wie gesagt - mit den einzelnen Halteelementen 14a bis 14d gekoppelt und insbesondere auch einteilig ausgebildet.

Fig. 4 zeigt eine weitere Darstellung einer erfindungsgemäßen Transportkette, das heißt, hier sind vier Halteeinrichtungen 4 dargestellt, die jeweils über die erwähnten Kettenglieder 26 miteinander gelenkig verbunden sind, und welche jeweils an Rolleinrichtungen geführt sind. In der hier gezeigten Ausführungsform sind die Kettenglieder mit je vier Laufrollen ausgestattet und werden auf den zwei parallelen in der waagerechten angeordneten Schiene 32 geführt. Der Durchmesser dieser Schienen bzw. Rohre liegt vorzugsweise in einem Bereich zwischen 10 mm und 14 mm, bevorzugt in einem Bereich zwischen 15 mm und 25 mm.

Dabei sind die Rolleneinrichtungen hier sowohl oberhalb als auch unterhalb der Schienen 32 vorgesehen. Die Kette wird über einen (nicht gezeigten) Spanner gespannt. Das Antriebselement bzw. die Nocke 22 bewirkt - wie oben erwähnt - jeweils eine Drehung von 90º pro Teilung. Ein Antrieb der Transportkette 6 ist hier über ein (nicht gezeigtes) Kettenrad möglich, wobei auch andere Antriebsmöglichkeiten in Betracht kommen.

Die Bestückung dieser Transportkette 6 bzw. der einzelnen Halteelemente 14a bis 14d erfolgt über so genannte Teilverzugssterne, hier beispielsweise einem Auslaufstern der Blasmaschine oder über Entkopplungssterne beispielsweise im Falle einer aseptischen Ausführung. Auch wären andere Bestückungen möglich, je nachdem welche Maschinen die Transporteinrichtung umgeben. Über die kontinuierliche Beschaltung des Drehelementes bzw. der Nocke 16 kann jedes Kettenglied bzw. jede Halteeinrichtung 4 bis zu vier Behältnisse aufnehmen.

Fig. 5 zeigt eine weitere Darstellung einer erfindungsgemäßen Transporteinrichtung. Man erkennt hier, dass die Halteeinrichtung ein Vierkantprofil 38 auf der Nockenwelle aufweist, welches im Innenbereich des Kettengliedes angeordnet ist. Weiterhin ist ein Federelement 36 vorgesehen, welches gegen das Vierkantprofil auf der Nockenwelle vorgespannt ist. Dieser Federelement 36 ermöglich eine stellungsgerechte Position bzw. Raststellung der einzelnen Halteelemente 14a bis 14d. Auch ermöglicht es dieses Federelement 36 der sich im Eingriff befindenden Kettenklammer im Falle eines Stellungsfehlers z. B. bei einer Asynchronität zu einem Ein- oder Auslaufstern nachzugeben, um eventuell wegzuklappen um auf diese Weise größere Beschädigungen zu vermeiden.

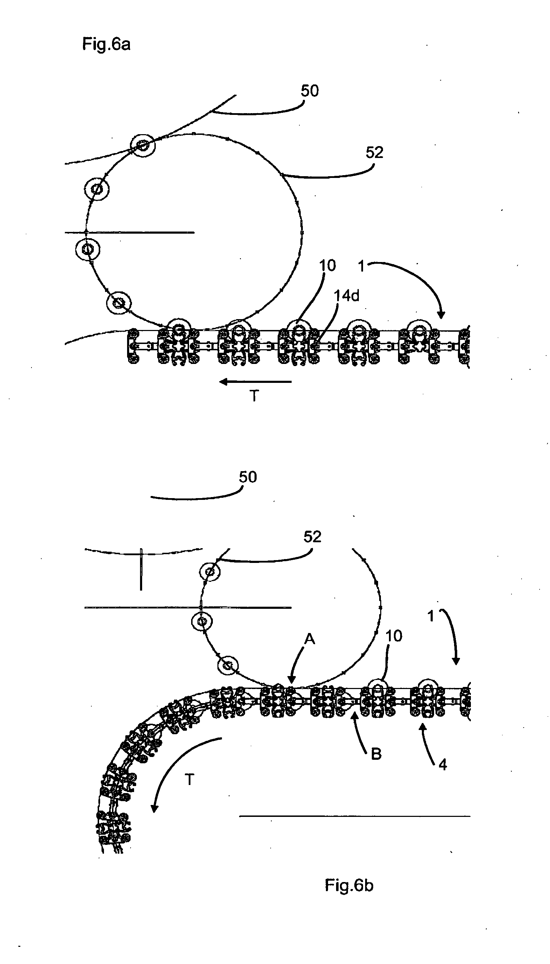

Die Figuren 6a bis 6d veranschaulichen vier unterschiedliche Anwendungsfälle der erfindungsgemäßen Transporteinrichtung. Dabei veranschaulicht Fig. 6a einen normalen Anlagenlauf, in dem die Transportrichtung 1 als konventionelle Transferkette betrieben wird. In diesem Falle wird hier nur das jeweils äußere Halteelement 14a mit einem Behältnis 10 bestückt.

Fig. 6b zeigt einen weiteren Betriebszustand. In diesem Zustand geht beispielsweise eine Folgemaschine 50 auf Störung und auch ein Übergabestern 52 bleibt auf drei bis fünf Maschinenteilungen stehen. Kurz vor dem Kettenauslauf A kann hier das oben erwähnte Drehelement 16 bzw. der Nockenbolzen zugeschaltet werden und dreht jeweils die Kettengarnitur um 90º auf eine leere Klammer weiter (Bereich B). In dieser Situation wird das Behältnis 10 ebenfalls um 90º verschwenkt. Die nunmehr leere Klammer 14d kann nunmehr den stehenden Stern 52 der Folgemaschine 50 passieren. Gleichzeitig können jedoch von einer vorgeschalteten Maschine weitere Behältnisse übernommen werden. Die Transporteinrichtung kann auf diese Weise bis zu vier Flaschen pro Kettenglied bzw. Halteeinrichtung 4 aus einer Blasmaschine weiter aufnehmen und auf diese Weise einen Heizofen leeren. Gleichzeitig kann eine Einlaufsperre an einem Heizofen für die Vorformlinge geschlossen werden, so dass keine neuen Vorformlinge mehr in die Heizeinrichtung und damit auch in die Blasmaschine einlaufen.

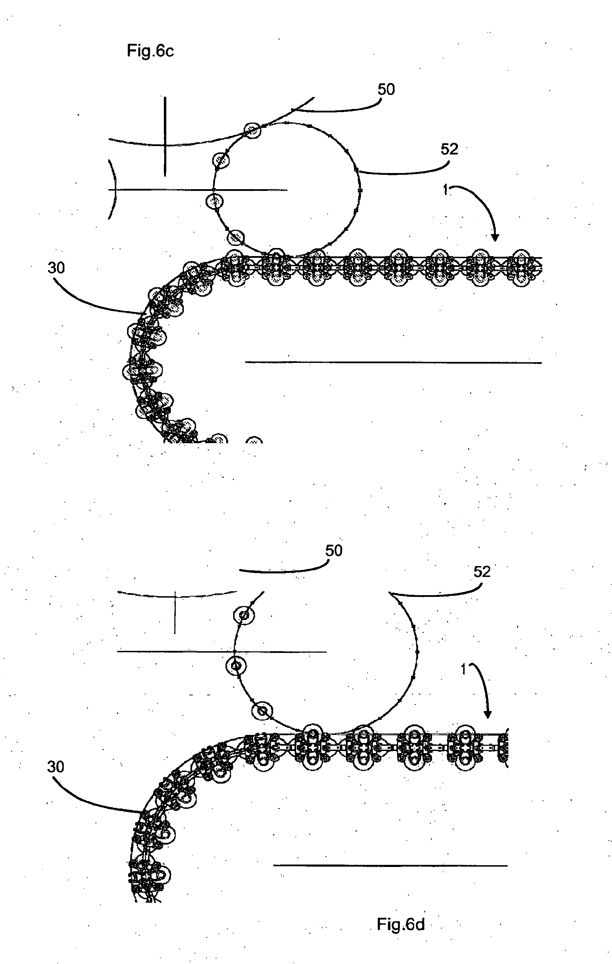

Fig. 6c kennzeichnet diesen entsprechenden Betriebszustand, in dem die Transporteinrichtung 1 jeweils bereits vier Behältnisse aufgenommen hat.

In Fig. 6d ist eine weitere Situation gezeigt, in der die Störung in der Nachfolgemaschine 50 wieder behoben wurde. Nachdem alle Störungen behoben sind, entleert die weitere Maschine hier eine Fülleinrichtung sämtliche Halteelemente, das heißt, es erfolgt ein Aufsynchronisieren mit der Transporteinrichtung 2. Auf diese Weise kann durch ein kontinuierliches Beschalten der Nocke 16 (die Nocke bleibt unten und greift jeweils in die Ausnehmungen des Antriebselementes ein) bewirkt werden, dass eine leere Klammer jeweils um 90º zur nächsten bestückten Klammer weitergeschaltet wird, bis sämtliche Halteeinrichtungen wieder leer sind. In dieser Situation kann die vorgeschaltete Blasmaschine (nicht gezeigt) wieder die erste Kette ab dem ersten vollständig geleerten Kettenglied bestücken, um auf diese Weise eine Lücke im Behältnisfluss zu vermeiden.

In einem weiteren Anwendungsfall wird die erfindungsgemäße Transporteinrichtung 2 auch zur Bodenkühlung verwendet. In diesem Falle ist es möglich, die Nocke 16 dauerhaft zuzustellen, das heißt jeweils Drehungen zu bewirken. Auf diese Weise durchläuft jedes Behältnis eine Schleife von vier Umläufen, was zur Bodenkühlung der Behältnisse genutzt werden kann und wird erst anschließend über einen Transportstern 52 an eine weitere Maschine 50 wie einen Füller übergeben.

Weiterhin kann die erfindungsgemäße Transporteinrichtung auch zu einer Lückenverarbeitung etwa vor einer Etikettiermaschine eingeführt werden. Dabei ist es möglich, dass die Kette zu einem Zyklusbeginn mit jeweils drei Flaschen pro Kettenglied bzw. Halteeinrichtung 4 gefüllt ist. Die vierte freie Klammer verrichtet einen konventionellen Behältnistransfer, das heißt, die Nocke ist nicht beschaltet. Bei einem Flaschenverlust der Blasmaschine wird die dadurch leere Klammer mit Verwendung der Nocke weitergeschaltet, und kann so noch dreimal pro Kettenglied eine lückenfreie Behältnisversorgung der nachgeschalteten Etikettiermaschine gewährleisten. Die Transporteinrichtung 1 bzw. Kette wird so nach und nach entleert und kann danach wieder befüllt werden. Falls die Anzahl der Kettenglieder anders gewählt ist als beispielsweise die Anzahl von Blasstationen auf einen vorgeordneten Blasmodul, wäre es auch möglich, mehrere Kettenglieder in Serie leerzufahren, um auf diese Weise Ausfälle einzelner Blasstationen über einen längeren Zeitraum hinweg kompensieren zu können.

Weiterhin wäre es auch möglich, die erfindungsgemäße Transporteinrichtung zu einem automatischen Garniturenwechsel einzusetzen. Hier kann jede einzelne Halteeinrichtung bzw. jedes Kettenglied mit bis zu vier unterschiedlichen Klammertypen bestückt werden, und im Falle eines Sortenwechsels mit der entsprechenden Garnitur beschaltet werden. So wäre es auch möglich, dass ein kombinierter Einsatz der Transporteinrichtung stattfindet, in dem beispielsweise jede Halteeinrichtung jeweils zwei Halteelemente unterschiedlichen Typs aufweist.

Die erfindungsgemäße Transporteinrichtung erlaubt einen hohen Leistungsbereich und Kettengeschwindigkeiten von bis zu drei Meter pro Sekunde. Weiterhin wird eine Reduzierung der Zeit für die Übergabe im Vergleich zu einem Sternblock mit Bodenkühlung erreicht. Insbesondere durch die Verwendung passiver Klammern kann eine Kostenreduzierung erreicht werden. Daneben ist auch eine kompakte Bauweise durch eine mehrfache Bestückung der Kette möglich.

Insbesondere durch die Verwendung der schaltbaren Nocken 16 für das gesamte System ist auch eine einfache Steuerung der Transporteinrichtung möglich. Auch kann der Rücklauf der Transporteinrichtung voll ausgenutzt werden. Weiterhin ist durch die Verwendung eines Schaltnocken eine schnelle Reaktionszeit möglich, da eine Nockenschaltung auch bei hoher Leistung durchführbar ist. Daneben wird - wie oben erwähnt - auch ein automatischer Garniturwechsel im Transfer ermöglicht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zum Transportieren von Behältnissen
- 2: Transporteinrichtung
- 4: Halteeinrichtung
- 10: Behältnis
- 10a: Tragring
- 10b: Mündung
- 14a - 14d: Halteelement
- 16: Drehelement, Schaltnocken
- 24: Verbindungswelle
- 22: Antriebselement
- 26: Kettengliedelement
- 28: Rolleinrichtung
- 32: Schiene
- 34: Verbindungselemente
- 36: Federelement
- 38: Vierkantprofil
- 50: Folgemaschine
- 52: Übergabestern
- T: Transportpfad
- D: Drehachse
- A, B: Bereiche
- L: Längsrichtung der Behältnisse

## Patentansprüche

1. Vorrichtung (1) zum Transportieren von Behältnissen (10) zwischen unterschiedlichen Anlagen zum Behandeln von Behältnissen (10), mit einer Transporteinrichtung (2), welche eine Vielzahl von Halteeinrichtungen (4) für die Behältnisse vereinzelt entlang eines vorgegebenen Transportpfades (P) transportiert, wobei wenigstens eine dieser Halteeinrichtungen (4) wenigstens zwei Halteelemente (14a, 14b) zum Greifen der Behältnisse aufweist und die Halteeinrichtung (4) gegenüber der Transporteinrichtung (2) um eine vorgegebene gemeinsame Drehachse (D) drehbar ist, wobei die Vorrichtung (1) eine Transportkette (6) zum Transportieren der Halteeinrichtungen (4) aufweist,
**dadurch gekennzeichnet, dass**
sich wenigstens zwei Halteelemente (14a, 14b) in unterschiedlichen Richtungen bezüglich der Drehachse (D) erstrecken, wobei durch diese Drehung genau ein Halteelement in die Lage versetzt werden kann, Behältnisse (10) von anderen Anlagen aufzunehmen oder an diese abzugeben.

2. Vorrichtung (1) nach Anspruch 1,
**dadurch gekennzeichnet, dass**
die Drehachse (D) im Wesentlichen parallel zu einer Längsachse (L) der transportierten Behältnisse (10) ist.

3. Vorrichtung (1) nach wenigstens einem der vorangegangenen Ansprüche,
**dadurch gekennzeichnet, dass**
wenigstens ein Halteelement (14a, 14b) ein passives Halteelement ist.

4. Vorrichtung (1) nach wenigstens einem der vorangegangenen Ansprüche,
**dadurch gekennzeichnet, dass**
wenigstens eine Halteeinrichtung (4) ein mechanisches Antriebselement (22) aufweist, mittels dem eine Drehung der Halteeinrichtung (4) um die Drehachse (D) bewirkbar ist.

5. Vorrichtung (1) nach Anspruch 4,
**dadurch gekennzeichnet, dass**
die Vorrichtung (1) wenigstens ein stationär angeordnetes Drehelement aufweist, welches mit dem Antriebselement der Halteeinrichtung (14a, 14b) zusammenwirkt, um diese um Achse (D) zu drehen.

6. Vorrichtung (1) nach wenigstens einem der vorangegangenen Ansprüche,
**dadurch gekennzeichnet, dass**
wenigstens eine Halteeinrichtung eine Rolleinrichtung (26) aufweist, welche gegenüber einer Führungsfläche abrollt.

7. Vorrichtung (1) nach wenigstens einem der vorangegangenen Ansprüche,
**dadurch gekennzeichnet, dass**
an wenigstens einer Halteeinrichtung (4) eine Abschirmeinrichtung (32) angeordnet ist, welche die Öffnungen der Behältnisse (10) wenigstens teilweise abdeckt.

8. Vorrichtung (1) nach wenigstens einem der vorangegangenen Ansprüche,
**dadurch gekennzeichnet, dass**
die Halteelemente (14a, 14b) wenigstens einer Halteeinrichtung (4) einteilig ausgebildet sind.

9. Vorrichtung (1) nach wenigstens einem der vorangegangenen Ansprüche,
**dadurch gekennzeichnet, dass**,
wenigstens zwei Halteelemente (14a, 14b) einer Halteeinrichtung (4) unterschiedlich ausgebildet sind.

10. Verfahren zum Transportieren von Behältnissen mit einer Vorrichtung nach wenigstens einem der vorangegangenen Ansprüche, wobei mittels einer Transporteinrichtung (2) eine Vielzahl von Halteeinrichtungen vereinzelt entlang eines vorgegebenen geschlossenen Transportpfades (T) transportiert werden und jede Halteeinrichtung mehrere Haltelemente (14a, 14b) zum Halten der Behältnisse aufweist, wobei die Halteelemente wenigstens zeitweise um eine vorgegebene Drehachse (D) gegenüber der Transporteinrichtung (2) gedreht werden, wobei durch dieses Drehen eine Umstellung der Transporteinrichtung von einem normalen Modus in einen Auffüllmodus, in dem die Transporteinrichtung als Puffer wirkt, vorgenommen werden kann.

11. Verfahren nach Anspruch 10,
**dadurch gekennzeichnet, dass**
wenigstens zeitweise wenigstens ein Behältnis entlang des vollständigen Transportpfades transportiert wird.

12. Verfahren nach wenigstens einem der vorangegangenen Ansprüche 10 - 11
**dadurch gekennzeichnet, dass**
die Behältnisse (10) von einer ersten Behandlungseinrichtung zum Behandeln von Behältnissen über die Transporteinrichtung (2) zu einer zweiten Behandlungseinrichtung zum Behandeln von Behältnissen (10) transportiert werden.

## Claims

1. Apparatus (1) for transporting containers (10) between different plants for treating containers (10), with a transport device (2) which transports a multiplicity of holding devices (4) for the containers individually along a pre-defined transport path (P), wherein at least one of these holding devices (4) has at least two holding elements (14a, 14b) for gripping the containers and the holding device (4) can be rotated in relation to the transport device (2) about a pre-defined common rotary axis (D), wherein the apparatus (1) has a transport chain (6) for transporting the holding devices (4), **characterized in that** at least two holding elements (14a, 14b) extend in different directions with respect to the rotation axis D, wherein by means of this rotation exact one holding element can be put in the situation to receive containers (10) from other plants or to deliver the same to said plants.

2. Apparatus (1) according to claim 1, **characterised in that** the rotary axis (D) is substantially parallel to a longitudinal axis (L) of the containers (10) transported.

3. Apparatus (1) according to at least one of the preceding claims, **characterised in that** at least one holding element (14a, 14b) is a passive holding element.

4. Apparatus (1) according to at least one of the preceding claims, **characterised in that** at least one holding device (4) comprises a mechanical drive element (22) by means of which a rotation of the holding device (4) about the rotary axis (D) can be provoked.

5. Apparatus (1) according to claim 4, **characterised in that** the apparatus (1) has at least one stationarily arranged rotary element which cooperates with the drive element of the holding device (14a, 14b) to rotate this about the axis (D).

6. Apparatus (1) according to at least one of the preceding claims, **characterised in that** at least one holding device has a roll device (26) which rolls against a guide surface.

7. Apparatus (1) according to at least one of the preceding claims, **characterised in that** on at least one holding device (4) a screening device (32) is arranged which at least partly covers the openings of the containers (10).

8. Apparatus (1) according to at least one of the preceding claims, **characterised in that** the holding elements (14a, 14b) of at least one holding device (4) are formed of one piece.

9. Apparatus (1) according to at least one of the preceding claims, **characterised in that** at least two holding elements (14a, 14b) of a holding device (4) are structured differently.

10. Method for transporting containers with an apparatus according to at least one of the preceding claims, wherein by means of a transport device (2) a multiplicity of holding devices are transported individually along a pre-specified closed transport path (T) and each holding device has several holding elements (14a, 14b) for holding the containers, wherein the holding elements are turned at least from time to time about a pre-specified rotary axis (D) in relation to the transport device (2), wherein by means of this rotation of the holding elements a change of the transport device for example from a normal mode in a filling mode, in which the device acts as a buffer, can be carried out.

11. Method according to claim 10, **characterised in that** at least from time to time, at least one container is transported along the complete transport path.

12. Method according to at least one of the preceding claims 10-11, **characterised in that** the containers (10) are transported from a first processing device for processing containers via the transport device (2) to a second processing device for processing containers (10).

## Revendications

1. Système (1) pour le transport de récipients (10) entre différentes installations de traitement de récipients (10), avec un dispositif de transport (2) convoyant une pluralité de dispositifs de maintien (4) pour les récipients séparément le long d'un chemin de transport (P) défini, au moins un desdits dispositifs de maintien (4) comportant au moins deux éléments de maintien (14a, 14b) pour la saisie des récipients, et le dispositif de maintien (4) étant rotatif autour d'un axe de rotation (D) commun défini par rapport au dispositif de transport (2), ledit système (1) comportant une chaîne de transport (6) pour le convoyage des dispositifs de maintien (4),
**caractérisé en ce qu'**
au moins deux éléments de maintien (14a, 14b) s'étendent dans des directions différentes par rapport à l'axe de rotation (D),
un seul élément de maintien pouvant par ladite rotation être mis en situation de recevoir des récipients (10) d'autres installations ou d'en délivrer à celles-ci.

2. Système (1) selon la revendication 1,
**caractérisé en ce que**
l'axe de rotation (D) est sensiblement parallèle à un axe longitudinal (L) des récipients (10) transportés.

3. Système (1) selon au moins une des revendications précédentes,
**caractérisé en ce qu'**
au moins un élément de maintien (14a, 14b) est un élément de maintien passif.

4. Système (1) selon au moins une des revendications précédentes,
**caractérisé en ce qu'**
au moins un dispositif de maintien (4) comporte un organe mécanique d'entraînement (22) pouvant déclencher une rotation du dispositif de maintien (4) autour de l'axe de rotation (D).

5. Système (1) selon la revendication 4,
**caractérisé en ce que**
ledit système (1) comporte au moins un élément de rotation disposé de manière stationnaire, lequel coopère avec l'organe d'entraînement du dispositif de maintien (14a, 14b) pour tourner celui-ci autour de l'axe (D).

6. Système (1) selon au moins une des revendications précédentes,
**caractérisé en ce qu'**
au moins un dispositif de maintien comporte un dispositif de roulement (26) qui roule par rapport à une surface de guidage.

7. Système (1) selon au moins une des revendications précédentes,
**caractérisé en ce qu'**
un dispositif d'écran (32) est disposé sur au moins un dispositif de maintien (4), lequel couvre au moins partiellement les ouvertures des récipients (10).

8. Système (1) selon au moins une des revendications précédentes,
**caractérisé en ce que**
les éléments de maintien (14a, 14b) d'au moins un dispositif de maintien (4) sont formés d'une seule pièce.

9. Système (1) selon au moins une des revendications précédentes,
**caractérisé en ce qu'**
au moins deux éléments de maintien (14a, 14b) d'un dispositif de maintien (4) sont réalisés différemment.

10. Procédé de transport de récipients avec un système selon au moins une des revendications précédentes, une pluralité de dispositifs de maintien étant convoyés séparément le long d'un chemin de transport (T) fermé défini au moyen d'un dispositif de transport (2) et chaque dispositif de maintien comportant plusieurs éléments de maintien (14a, 14b) pour maintenir les récipients, les éléments de maintien étant au moins temporairement tournés autour d'un axe de rotation (D) défini par rapport au dispositif de transport (2), cette rotation des éléments de maintien permettant de commuter le dispositif de transport par exemple d'un mode normal vers un mode de remplissage où le dispositif de transport agit comme tampon.

11. Procédé selon la revendication 10,
**caractérisé en ce qu'**
au moins un récipient est transporté au moins temporairement tout le long du chemin de transport.

12. Procédé selon au moins une des revendications 10 et 11,
**caractérisé en ce que**
les récipients (10) sont convoyés par le dispositif de transport (2) d'un premier dispositif de traitement pour le traitement de récipients vers un deuxième dispositif de traitement pour le traitement de récipients (10).
